# FASCICULE DE BREVET EUROPEEN

(11) **EP 2 595 858 B1**
(45) Date de publication et mention de la délivrance du brevet: **25.02.2015**
(21) Numéro de dépôt: 11741655.2
(22) Date de dépôt: 11.07.2011
(51) Int. Cl.: B62D 25/20, B60N 2/01

(54) **CHASSIS AUTOMOBILE AVEC RENFORT LATERAL DE SOUTIEN D'ASSISE**
FAHRZEUGCHASSIS MIT EINER SEITLICHEN STÜTZE FÜR DIE SITZFLÄCHE
CAR FRAME WITH A LATERAL SUPPORT FOR THE SEAT BASE

(30) Priorité: 23.07.2010 FR 1056045
(43) Date de publication de la demande: 29.05.2013
(73) Titulaire: Renault S.A.S., 92100 Boulogne-Billancourt (FR)
(72) Inventeur: TABUTEAU, Pascal, F-78180 Montigny le Bretonneux (FR); MAUDUIT, Thomas, F-78960 Voisins Le Bretonneux (FR); BISROR, Olivier, F-92350 Le Plessis Robinson (FR)
(86) Numéro de dépôt international: PCT/FR2011/051646
(87) Numéro de publication internationale: WO 2012/010772

(56) Documents cités:
- EP-A1- 0 619 215
- JP-A- 3 028 087

## Description

L'invention se situe dans le domaine des châssis pour véhicule automobile, notamment des véhicules à propulsion électrique ou hybride. Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence.

Une solution consiste à exploiter un volume délimité sous le siège des passagers, en modifiant le profil du plancher de manière à isoler ce volume de l'habitacle. Le siège des passagers repose alors directement sur une zone surélevée du plancher. La hauteur du siège peut être la même que la hauteur du siège dans des véhicules de la même gamme construits pour être propulsés par un moteur thermique, ou peut être plus élevée.

La demande de brevet JP 07 156 826 décrit ainsi une structure de châssis pour véhicule automobile à propulsion électrique, dans laquelle un volume sous les sièges des passagers avant et arrière est réservé pour la batterie en séparant ce volume de l'habitacle. Des plaques de rehausse verticales sont placées à l'avant et à l'arrière des sièges. Une zone d'assise de plancher surélevée s'étend d'avant en arrière entre ces plaques de rehausse verticales, et s'étend latéralement entre des supports de rehausse latéraux fixés aux flancs latéraux de la carrosserie.

Le document JP03028087 dévoile le préambule de la revendciation 1. telle structure n'est pas applicable à un véhicule à trois portes puisqu'il faut que les sièges des passagers arrière soient bordés par des flancs fixes de carrosserie, auxquels les supports de rehausse latéraux sont assemblés. En outre, dans le cas où l'on souhaite décliner un même véhicule dans un modèle à propulsion électrique et dans un modèle à propulsion par moteur thermique, la ligne de points de soudure permettant d'assembler les éléments de plancher aux longerons du véhicule ne peut pas avoir la même géométrie pour le véhicule électrique et pour le véhicule thermique. On est alors obligé de mettre en place, pour la production des deux véhicules, deux lignes de soudage distinctes, ce qui renchérit à la fois les coûts de développement et de production.

L'invention a pour but de proposer une géométrie de châssis pour véhicule électrique ou pour un autre véhicule nécessitant un volume de réservoir d'énergie plus élevé que les classiques réservoirs de combustibles. L'invention a également pour but de proposer une géométrie de châssis qui permette de produire en parallèle des véhicules à propulsion électrique et des véhicules à propulsion par moteur thermique, qui utilisent un grand nombre de composants et de moyens de production communs.

L'invention propose ainsi un châssis de véhicule automobile qui comporte deux supports latéraux de plancher et une partie support d'assise disposée entre deux pièces de rehausse latérales fixées par dessus les supports latéraux de plancher et assemblées aux supports latéraux de plancher. Le châssis comprend deux renforts de soutien d'assise assemblés chacun à un support latéral de plancher et à une pièce de rehausse latérale, chaque renfort de soutien d'assise comprenant :
- un plateau sensiblement horizontal prolongeant latéralement la partie support d'assise, assemblé à la pièce de rehausse latérale le long d'un bord d'accostage sensiblement vertical du plateau, et
- un pied d'appui unique s'étendant vers le bas à partir du plateau, assemblé au support latéral de plancher, et dont l'extrémité d'assemblage est disposée à l'aplomb du plateau, à distance d'une projection sur l'horizontale du bord d'accostage.

Le plateau peut ainsi servir à appuyer les parties latérales d'une mousse d'assise de siège posée sur la partie support d'assise.

Avantageusement, le contour du plateau est longé par un ou plusieurs reliefs aptes à rigidifier le bord du plateau. Le bord d'accostage est de préférence traversé par au moins deux orifices d'assemblage permettant d'assembler le plateau à un ou plusieurs supports horizontaux.

De préférence, les pièces de rehausse latérale sont sensiblement parallèles au plan médian longitudinal du véhicule, et le bord d'accostage du plateau est sensiblement parallèle au plan moyen du pied. Le plan moyen du pied est donc lui aussi parallèle au plan médian longitudinal du véhicule. Le pied peut ainsi rigidifier le plateau en flexion suivant une direction longitudinale du véhicule.

De préférence, l'extrémité d'assemblage du pied est traversée par un orifice d'assemblage sensiblement perpendiculaire au bord d'accostage.

L'orifice d'assemblage est ainsi sensiblement perpendiculaire au plan médian longitudinal du véhicule, ce qui facilite son accessibilité lors de l'assemblage du pied au support latéral de plancher.

Selon un mode de réalisation avantageux, le plateau est en tôle métallique, et le pourtour du plateau comporte un ou plusieurs reliefs rigidifiants sous forme de bord tombé, et/ou sous forme de goulotte emboutie longeant le pourtour de la tôle. Le plateau peut ainsi être réalisé à faible coût par emboutissage d'une tôle d'épaisseur réduite.

Le plateau peut comporter une goulotte emboutie le long du bord d'accostage. La goulotte constitue alors une zone de rigidité améliorée, qui peut être percée de trous d'assemblage placés à une distance adaptée du bord d'accostage. Par distance adaptée, on entend une distance permettant de visser le plateau sur des ferrures placées à l'équerre des pièces de rehausse latérale. Le plateau peut comporter des bords tombés le long de ses bords autres que le bord d'accostage.

Un tel relief est simple à obtenir par emboutissage, contribue à la rigidité du plateau, et permet d'obtenir un bord arrondi qui limitera les concentrations de contraintes qui risqueraient d'entailler une mousse de siège en appui sur le plateau. On peut aussi envisager des variantes de réalisations dans lesquelles le plateau comporte des bords tombés sur l'intégralité de son pourtour. La hauteur du bord tombé peut par exemple être comprise entre 5 et 20mm. La profondeur de la goulotte peut par exemple être comprise entre 5 et 20mm.

Le pied peut également être réalisé en tôle métallique, la largeur du pied diminuant entre le plateau et l'extrémité d'assemblage.

Pour limiter la consommation de matière et le pied peut être rigidifié par des plis de la tôle, par exemple parallèles aux bords du pied.

Selon un mode de réalisation avantageux, le pied en tôle est plié en équerre, la partie supérieure de l'équerre étant solidarisée à la surface du plateau.

Le plateau peut comporter une zone en dévers, relevée par rapport à un premier plan moyen du plateau le long d'une ligne perpendiculaire au bord d'accostage. La zone en dévers peut être par exemple une portion de surface cylindrique d'axe perpendiculaire au bord d'accostage. Le plateau peut ainsi prolonger un relief transversal au véhicule de la partie support d'assise, ce relief permettant de limiter des glissements d'avant en arrière d'une mousse d'assise posée sur le support d'assise et sur les deux renforts latéraux de support d'assise.

De manière préférentielle, le renfort est assemblé sur la pièce de rehausse latérale et sur les support latéral de plancher par au moins deux ferrures en tôle pliée, offrant chacune une première face de pré-assemblage apte à être solidarisée à la pièce de rehausse latérale ou au support latéral de plancher, et une deuxième face sensiblement perpendiculaire à la première face, apte à venir en contact avec un plan du renfort.

Selon un mode de réalisation préféré, le pied est assemblé au support latéral de plancher par une ferrure pliée à angle droit, et est assemblé au pièces de rehausse latérales par des ferrures qui peuvent être pliées pour former un angle compris entre 82 et 88°.

Le plateau, le pied et les ferrures peuvent être réalisés à partir d'une même tôle d'acier d'épaisseur 0,4mm à 1mm, par exemple une tôle d'acier d'épaisseur 0,65mm. On simplifie ainsi l'approvisionnement matière pour la fabrication de l'ensemble renfort + ferrures.

Avantageusement, le plateau présente une encoche de largeur supérieure à la largeur d'une sangle de ceinture de sécurité du véhicule. Le plateau peut ainsi contribuer au guidage d'une ceinture de sécurité tendue par exemple entre le support latéral de plancher et le dessus du siège. On peut également envisager des variantes de réalisation dans lesquels le renfort de soutien d'assise est réalisé en matière plastique injectée, le plateau et le pied étant moulés d'un seul tenant. Dans ce mode de réalisation, le plateau peut présenter des nervures de renfort réparties sur sa surface inférieure, au lieu de longer seulement le contour du plateau. Le pied, au lieu d'être globalement plan, peut être constitué par plusieurs nappes convergeant entre elles suivant un ou plusieurs axes verticaux, de manière à présenter une section horizontale "en étoile" ou en "râteau". L'extrémité d'assemblage du pied pourra dans ce cas être dépourvue d'orifice d'assemblage, et être par exemple insérée dans un support à coupelle lui aussi moulé, vissé par sa partie centrale au support latéral de plancher, et limitant les déplacements horizontaux du pied.

La présente invention sera mieux comprise à la lecture de la description détaillée de quelques modes de réalisation pris à titre d'exemples nullement limitatifs, et illustrés par les dessins annexés, sur lesquels :
- la figure 1 est une vue en perspective partielle d'un châssis suivant l'invention,
- la figure 2 est une vue en coupe transversale d'un élément du châssis de la figure 1,
- la figure 3 est une vue en perspective des points d'assemblages du châssis des figures 1 et 2, sur lesquels est assemblé l'élément de la figure 2.

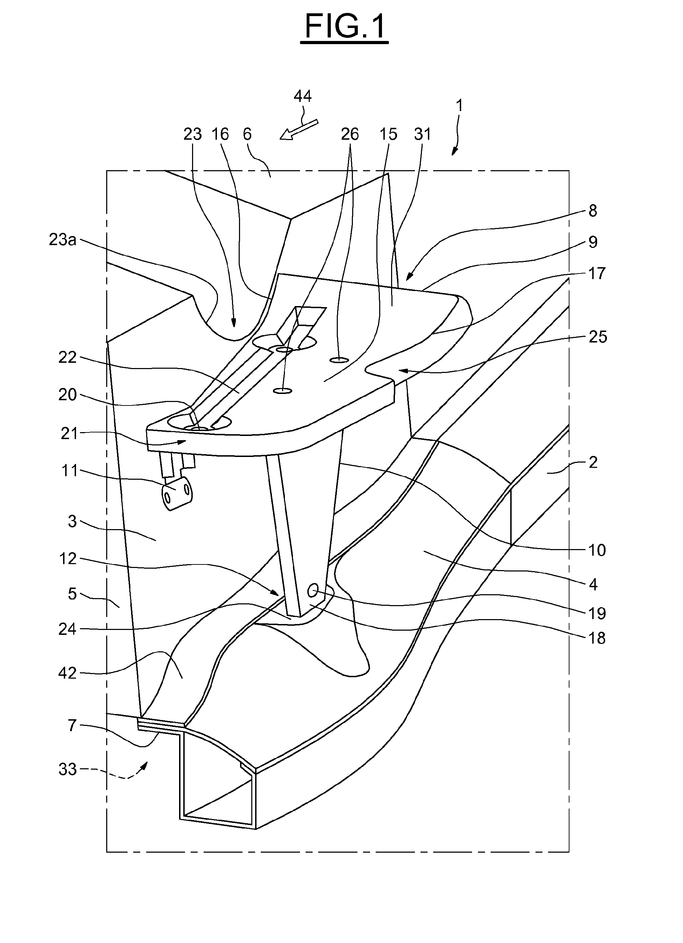

Tel qu'illustré sur la figure 1, un châssis 1 de véhicule comprend une portion latérale gauche et une portion latérale droite symétriques l'une de l'autre par rapport à un plan médian longitudinal du véhicule. Seule la portion latérale gauche est représentée sur la figure 1, la flèche 44 indiquant une direction allant de l'arrière vers l'avant du véhicule (non représenté). La portion latérale gauche comprend un longeron gauche 2, constitué par une poutre de section en "U". Les dimensions de la section en U varient de l'avant vers l'arrière du longeron, et les extrémités du U sont recourbées de manière à définir deux rebords longitudinaux du longeron, sur lesquels peuvent être assemblées par soudage d'autres tôles constitutives du châssis. Le longeron 2 est recouvert sur sa partie avant par un support de plancher latéral 4. Le support de plancher latéral 4 est constitué par une tôle de direction sensiblement horizontale assemblée par soudure à chacun des rebords du longeron 2, c'est-à-dire au rebord interne 7, plus proche de l'axe du véhicule, et au rebord externe.

Sur le rebord interne 7 du longeron 2, est assemblé, d'une part, un rebord interne du support latéral de plancher 4, et d'autre part, un rebord inférieur d'une pièce de rehausse latérale 3. La pièce de rehausse latérale 3 est constituée par une portion de tôle sensiblement verticale, orientée suivant l'axe longitudinal du véhicule, éventuellement légèrement inclinée en direction du plan médian longitudinal du véhicule.

Par-dessus les deux pièces de rehausse latérale gauche et droite 3, est disposée une pièce sensiblement horizontale 6 faisant office de support d'assise de siège. La pièce de support d'assise 6 peut par exemple être réalisée en tôle emboutie, mais des variantes de réalisation utilisant d'autres matériaux, tels que des composites polymères renforcés de fibres, sont envisageables. La pièce de support d'assise 6 se trouve entre les bords internes 7 des deux supports latéraux de plancher 4. La tôle de support d'assise 6 est limitée à droite et à gauche par les plans des deux pièces de rehausse latérale, avec lesquels elle est jointive. Vers l'avant du véhicule, la tôle de support d'assise 6 se poursuit par une plaque avant 5, constituée par une portion de la même tôle rabattue vers le bas à partir de la portion horizontale 6 constituant le support d'assise. La plaque avant 5 s'étend elle aussi entre les bords internes des supports de plancher latéral 4. La partie horizontale de la tôle 6 de support d'assise est parcourue, dans le sens transversal au véhicule, par un renfoncement 23 dont les extrémités droite et gauche définissent les contours d'échancrures 23a ménagées dans les parties supérieures des pièces de rehausse latérales 3. Ce renfoncement permet d'assembler sur le support d'assise 6, une banquette 13 de mousse d'assise, en limitant la propension de celle-ci à coulisser de l'arrière vers l'avant du véhicule, ou inversement.

Sur le flanc de chaque pièce de support d'assise 3, est assemblé un plateau 9 d'un renfort de soutien d'assise 8. Le plateau 9 prolonge latéralement, dans un plan légèrement en retrait, le support d'assise 6, ce qui permet d'appuyer sur ce support d'assise une banquette de siège plus large que le support même, et en particulier, une banquette de siège plus large que l'espace séparant les bords internes 7 des longerons 2.

Le plateau 9 est en contact avec la pièce de rehausse latérale 3 le long d'un bord d'accostage 16 du plateau. Il est assemblé à la pièce de rehausse latérale 3 par l'intermédiaire de ferrures 11, de préférence vissées à la fois sur le plateau 9 et sur la pièce de rehausse latérale 3. Le plateau 9 est supporté par un pied 10, assemblé au plateau 9 par des vis ou des points de soudure 26. Le pied 10 est constitué par une portion de tôle sensiblement trapézoïdale, dont la largeur diminue quand on s'éloigne du plateau. Le pied 10 se termine à son extrémité inférieure par une extrémité d'assemblage 18 percée d'un orifice d'assemblage 19, et qui est solidarisée par l'intermédiaire d'une ferrure 12 (masquée par le pied 10 sur la figure 1) avec le support de plancher latéral 4.

Le plan moyen du pied 10 est sensiblement parallèle au plan médian longitudinal du véhicule. L'orientation sensiblement verticale du pied 10 permet de reporter avec un maximum d'efficacité les efforts verticaux exercés sur le plateau 9, vers les supports latéraux de plancher 4. On peut ainsi s'autoriser une consommation minimale de matière pour réaliser le pied 10. En orientant le plan du pied 10 suivant l'axe longitudinal du véhicule, on facilite l'assemblage du pied par vissage transversal sur la ferrure 12. En effet, le vissage de la vis reliant l'extrémité d'assemblage 18 et la ferrure 12 se fait alors suivant une direction particulièrement accessible, perpendiculaire au plan médian du véhicule. Cette orientation du pied permet également d'utiliser la largeur supérieure du pied pour rigidifier le plateau en flexion d'avant en arrière.

Le plateau 9 comprend une surface centrale 15 qui est limitée d'une part par le bord d'accostage 16, et d'autre part par une courbe contour 17 joignant les extrémités du bord d'accostage 16. Le plateau 9 présente une goulotte 22 emboutie de manière à longer le bord d'accostage 16 et à rigidifier ce bord en flexion. Le long de la courbe contour 17, la tôle formant le plateau 9 est emboutie de manière à définir des bords tombés 21 orientés vers le bas. Ces bords tombés contribuent encore à la rigidité globale en flexion du plateau 9. La courbe contour 17 et le bord tombé 21 comportent une encoche 25 dont la largeur est suffisante pour que l'encoche 25 puisse accueillir une sangle de ceinture de sécurité tendue sensiblement perpendiculairement au plateau 9.

Le plateau 9 présente une portion en dévers 31, relevée vers l'arrière du véhicule, de sorte que la section longitudinale du plateau épouse au moins en partie l'échancrure 23a de la pièce de rehausse latérale 3. On peut envisager des variantes de réalisation, avec un plateau 9 présentant une surface supérieure 15 plane, ou au contraire avec un plateau 9 ayant un profil en cuvette de manière à suivre le contour de l'échancrure 23a de la pièce de rehausse latérale, de part et d'autre de son point le plus bas.

L'extrémité du pied vertical 10 est assemblée, par rapport à la direction transversale du véhicule, sensiblement au centre de la surface centrale 15 du plateau 9. Ainsi, le pied 9 permet de transmettre efficacement les efforts verticaux transmis au plateau 9 tout en gardant la structure rehaussée des sièges indépendante des tôles latérales de carrosserie du véhicule.

De par cette position, l'extrémité d'assemblage 18 du pied 10 reste relativement proche, suivant la direction transversale du véhicule, du bord interne 7 du longeron 2. Il se trouve que le long de ce bord interne 7, le support latéral de plancher 4 présente une bande 42 de surface sensiblement horizontale destinée à permettre l'assemblage, par soudage en trois épaisseurs, du longeron 2, du support latéral de plancher 4, et de la pièce de rehausse latérale 3. Si cette bande 42 de surface horizontale est suffisamment large, la ferrure 12 d'assemblage du pied 10 peut y être fixée. Dans le cas contraire, un relief 24 peut être embouti dans le support latéral de plancher 4 au voisinage de cette bande 42, de manière à élargir localement la surface horizontale 42 bordant intérieurement le support de plancher 4.

Il est ainsi envisageable d'utiliser la même géométrie de support de plancher qu'une géométrie initiale déjà utilisée pour réaliser des véhicules sans renfort de soutien d'assise.

Si dans cette géométrie initiale la largeur de la bande 42 est insuffisante pour y fixer directement la ferrure 12 d'assemblage du pied 10, il est alors relativement peu coûteux d'emboutir un relief 24 dans le support latéral de plancher existant.

La partie supérieure 6 de la tôle support d'assise et la plaque avant 5, ainsi que les deux pièces de rehausse latérale 3, définissent un volume 33, situé sous les sièges passagers, et séparé de l'habitacle du véhicule. Dans ce volume 33 peuvent par exemple être logés des batteries d'accumulateur, ou d'autres formes de réserve d'énergie (réservoir de combustible liquéfié sous pression...), et/ou des moyens de gestion (électronique de commande, vannes...) de telles réserves d'énergie. Le volume 33 ainsi défini se trouve en partie centrale du véhicule, à distance des ouvrants ou des flancs de carrosserie droit et gauche du véhicule. Ainsi, la structure supportant les sièges, et comportant notamment les pièces de rehausse latérale 3 et la tôle 6 du support d'assise, reste indépendante des bords latéraux de la carrosserie. Ce type de logement pour réservoir d'énergie peut ainsi convenir aussi bien à un véhicule à trois portes qu'à un véhicule à cinq portes.

En outre, il est possible d'utiliser certaines pièces du châssis décrit, aussi bien pour un véhicule à propulsion thermique classique, que pour un véhicule à propulsion électrique. Ainsi, les longerons 2 et les supports latéraux de plancher 4 pourront être communs aux deux véhicules. Les bordures internes 7 des longerons viennent alors supporter, soit un plancher de véhicule classique situé dans le prolongement des supports latéraux de plancher (pour un véhicule à propulsion thermique) soit, (dans le cas d'un véhicule à propulsion électrique), une portion centrale surélevée de plancher assemblée aux rebords 7 par les parties inférieures des pièces de rehausse latérale 3.

Une même installation de soudure peut ainsi être utilisée pour assembler alternativement des planchers rehaussés et des planchers non rehaussés, le tracé de la ligne de soudure restant le même le long du rebord 7. Le processus de fabrications des supports latéraux de plancher ne diffère que par l'emboutissage du relief 24 de fixation de la ferrure 12.

On modifie ainsi légèrement le processus de fabrication de supports latéraux de plancher. En revanche, on conserve la partie coûteuse de la ligne d'assemblage qui comprend notamment la ligne d'assemblage et de soudure de la partie centrale du plancher sur les supports latéraux de plancher 4 et les bords internes 7 des longerons.

Les positions des ferrures 11 et 12 d'assemblage du renfort permettent d'assembler ces ferrures dans un premier temps au châssis par soudage ou par vissage, et dans un second temps au renfort de support d'assise 8 par soudage, vissage ou rivetage. On accède à chaque fois à la zone d'assemblage soit à la verticale, soit à l'horizontale, à partir de l'extérieur du châssis. Le procédé d'assemblage est ainsi particulièrement simple.

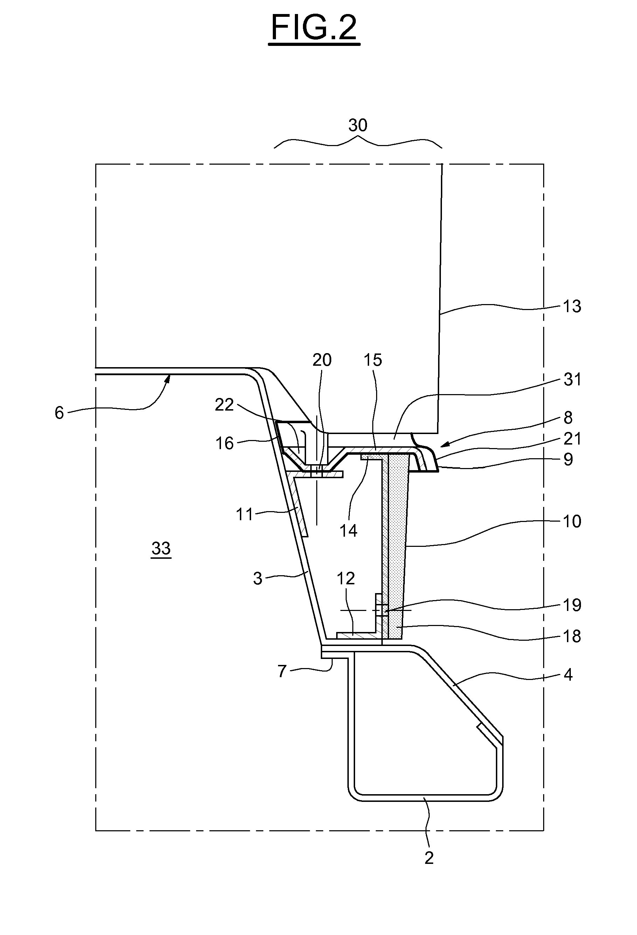

La figure 2 illustre une vue en coupe transversale du renfort 8 de support d'assise. On retrouve sur la figure 2 des éléments communs à la figure 1, les mêmes élément étant alors désignés par les mêmes références. Est également représenté sur la figure 2 un bloc 13 de mousse d'assise constituant la partie inférieure d'une banquette de passagers arrière du véhicule. La mousse d'assise 13 est appuyée, en partie centrale de la banquette, sur la partie horizontale du support d'assise 6, ainsi que dans le renfoncement 23 de ce support d'assise. La mousse d'assise 13 présente une zone de débord 30 qui se trouve en porte-à-faux par rapport au support d'assise 6, à droite et à gauche de ce support d'assise.

La mousse d'assise 13 étant une pièce de soutien de rigidité structurelle réduite, elle pourrait s'affaisser si un passager venait à s'appuyer sur le bord extrême droit ou gauche de la banquette. Afin d'éviter un tel affaissement, la portion en porte-à-faux 30 est en appui sur le plateau 9 du renfort de support d'assise 8.

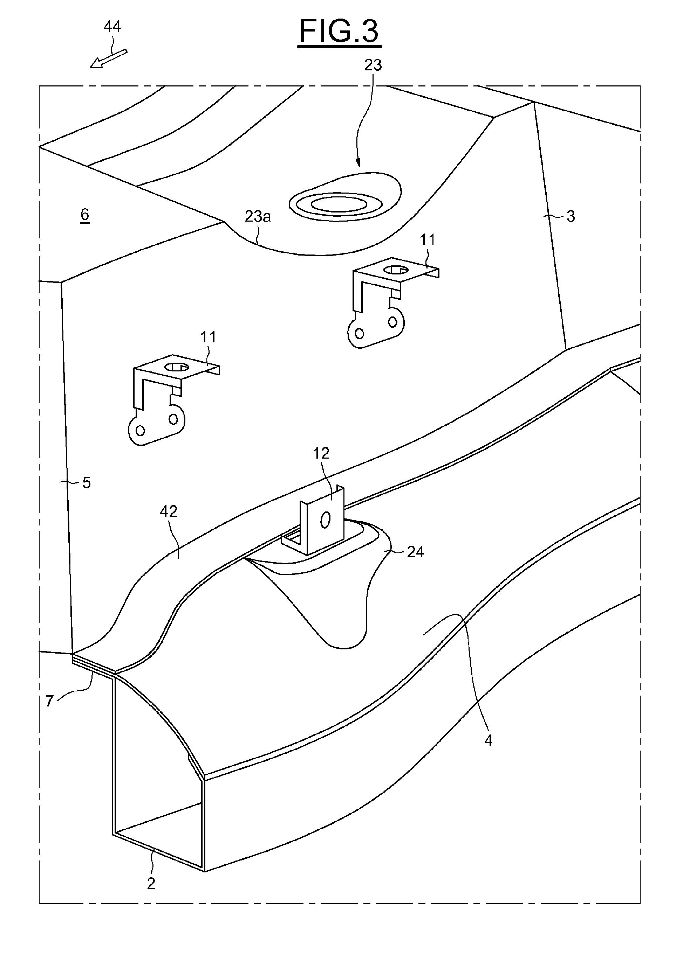

La figure 3 est une illustration en perspective de la portion de châssis déjà décrite aux figures 1 et 2, avant l'assemblage du renfort de support d'assise 8. La figure 3 permet notamment de mieux voir la disposition des ferrures d'assemblage 11 et 12, ainsi que le relief 24 permettant l'assemblage de la ferrure 12. On retrouve sur la figure 3 des éléments communs aux figures 1 et 2, les mêmes élément étant alors désignés par les mêmes références.

Grâce à l'agencement décrit plus haut, on rend disponible sous les sièges des passagers arrière, un volume 33 dans lequel peut être logé un réservoir d'énergie tel qu'un lot de batteries d'accumulateur, ou un réservoir de combustible sous pression. L'assemblage proposé permet de bénéficier d'une structure de support de siège indépendante des bords latéraux de la carrosserie, convenant aussi bien à un véhicule à trois portes qu'à un véhicule à cinq portes. La structure des renforts de support d'assise permet de soutenir l'intégralité de la banquette par le simple ajout de deux pièces peu onéreuses à fabriquer et pouvant être assemblées de manière simple sur le châssis. Le véhicule bénéficiant du volume de stockage supplémentaire peut être fabriqué sur les mêmes lignes de fabrication qu'un véhicule similaire à plancher non rehaussé, en modifiant relativement peu les processus d'assemblage. On réduit ainsi les coûts de développement et de fabrication de nouveaux véhicules à propulsion électrique ou alternative. L'invention ne se limite pas à l'exemple particulier décrit sur les figures 1 à 3, le principe d'un plancher avec zone centrale surélevée sans (presque) modifier les supports latéraux de planchers, pouvant être adapté à de nombreuses géométries de véhicules, dans les limites définies par les revendications.

## Revendications

1. Châssis (1) de véhicule automobile comportant deux supports latéraux (4) de plancher et une partie support d'assise (6) disposée entre deux pièces de rehausse latérales (3) fixées par dessus les supports latéraux de plancher (4) et assemblées aux supports latéraux de plancher, deux renforts (8) de soutien d'assise assemblés chacun à un support latéral de plancher (4) et à une pièce de rehausse latérale (3), chaque renfort de soutien d'assise (8) comprenant :
- un plateau sensiblement horizontal (9) prolongeant latéralement la partie support d'assise (6), et
- un pied d'appui (10) s'étendant vers le bas à partir du plateau (9), assemblé au support latéral de plancher (4), **caractérisé en ce que** le plateau (9) est assemblé à la pièce de rehausse latérale (3) le long d'un bord d'accostage (16) sensiblement vertical du plateau (9), **en ce que** le pied est unique et **en ce que** et son extrémité d'assemblage (18) est disposée à l'aplomb du plateau (9), à distance d'une projection sur l'horizontale du bord d'accostage (16).

2. Châssis suivant la revendication 1, dans lequel le contour du plateau est longé par un ou plusieurs relief (21, 22) aptes à rigidifier le bord du plateau (9), et dans lequel le bord d'accostage (16) est traversé par au moins deux orifices (20) d'assemblage permettant d'assembler le plateau (9) à un ou plusieurs supports horizontaux (11).

3. Châssis suivant l'une des revendications précédentes, dans lequel le plateau (9) est en tôle métallique, le pourtour du plateau comportant un ou plusieurs reliefs rigidifiants sous forme de bord tombé (21), et/ou sous forme de goulotte emboutie (22) longeant le pourtour de la tôle.

4. Châssis suivant la revendication précédente, où le pied est en tôle métallique, la largeur du pied diminuant entre le plateau (9) et l'extrémité d'assemblage (18).

5. Châssis suivant la revendication précédente, dans lequel le pied (10) est plié en équerre, la partie supérieure (14) de l'équerre étant solidarisée à la surface (15) du plateau (9).

6. Châssis suivant les revendications 4 à 5, dans lequel le bord d'accostage (16) du plateau est sensiblement parallèle au plan moyen du pied (10).

7. Châssis suivant l'une des revendications précédentes, dans lequel le plateau (9) comporte une zone en dévers (31), relevée par rapport à un premier plan moyen (15) du plateau le long d'une ligne perpendiculaire au bord d'accostage (16).

8. Châssis suivant l'une des revendications précédentes, dans lequel le renfort (8) est assemblé sur la pièce de rehausse latérale (3) et sur le support latéral de plancher par au moins deux ferrures (11, 12) en tôle pliée, offrant chacune une première face de pré-assemblage apte à être solidarisée à la pièce de rehausse latérale (3) ou au support latéral de plancher (4), et une deuxième face sensiblement perpendiculaire à la première face, apte à venir en contact avec un plan du renfort (8).

9. Châssis suivant l'une des revendications précédentes, dont le plateau (9) présente une encoche (25) de largeur supérieure à la largeur d'une sangle de ceinture de sécurité du véhicule.

## Patentansprüche

1. Kraftfahrzeugchassis (1), das zwei seitliche Bodenträger (4) und einen Sitzträgerteil (6), der zwischen zwei seitlichen Aufsatzbauteilen (3) angeordnet ist, die über den seitlichen Bodenträgern (4) befestigt und an die seitlichen Bodenträger montiert sind, und zwei Sitzstützverstärkungen (8) aufweist, die je an einen seitlichen Bodenträger (4) und an ein seitliches Aufsatzbauteil (3) montiert sind, wobei jede Sitzstützverstärkung (8) enthält:
- eine im Wesentlichen waagrechte Platte (9), die den Sitzträgerteil (6) seitlich verlängert, und
- einen Stützfuß (10), der sich ausgehend von der Platte (9) nach unten erstreckt, an den seitlichen Bodenträger (4) montiert ist,
**dadurch gekennzeichnet, dass** die Platte (9) an das seitliche Aufsatzbauteil (3) entlang eines im Wesentlichen senkrechten Anlegerands (16) der Platte (9) montiert ist, dass der Fuß einzig ist und dass sein Montageende (18) im rechten Winkel zur Platte (9) in Abstand zu einer Projektion auf die Waagrechte des Anlegerands (16) angeordnet ist.

2. Chassis nach Anspruch 1, wobei der Umriss der Platte von einem oder mehreren Reliefs (21, 22) umrandet wird, die den Rand der Platte (9) versteifen können, und wobei der Anlegerand (16) von mindestens zwei Montageöffnungen (20) durchquert wird, die es ermöglichen, die Platte (9) an einen oder mehrere waagrechte Träger (11) zu montieren.

3. Chassis nach einem der vorhergehenden Ansprüche, wobei die Platte (9) aus Metallblech ist, wobei der Umriss der Platte eines oder mehrere Versteifungsreliefs in Form eines Bördelrands (21) und/oder in Form einer tiefgezogenen Rinne (22) aufweist, die den Umriss des Blechs umrandet.

4. Chassis nach dem vorhergehenden Anspruch, wobei der Fuß aus Metallblech ist, wobei die Breite des Fußes zwischen der Platte (9) und dem Montageende (18) abnimmt.

5. Chassis nach dem vorhergehenden Anspruch, wobei der Fuß (10) winkelmäßig gebogen ist, wobei der obere Teil (14) des Winkelstücks fest mit der Fläche (15) der Platte (9) verbunden ist.

6. Chassis nach den Ansprüchen 4 ä 5, wobei der Anlegerand (16) der Platte im Wesentlichen parallel zur Mittelebene des Fußes (10) ist.

7. Chassis nach einem der vorhergehenden Ansprüche, wobei die Platte (9) einen überhöhten Bereich (31) aufweist, der bezüglich einer ersten Mittelebene (15) der Platte entlang einer Linie lotrecht zum Anlegerand (16) angehoben ist.

8. Chassis nach einem der vorhergehenden Ansprüche, wobei die Verstärkung (8) an das seitliche Aufsatzbauteil (3) und an den seitlichen Bodenträger durch mindestens zwei Beschläge (11, 12) aus Falzblech montiert ist, die je eine erste Vormontageseite, die fest mit dem seitlichen Aufsatzbauteil (3) oder mit dem seitlichen Bodenträger (4) verbunden werden kann, und eine zweite Seite im Wesentlichen parallel zur ersten Seite aufweisen, die mit einer Ebene der Verstärkung (8) in Kontakt kommen kann.

9. Chassis nach einem der vorhergehenden Ansprüche, dessen Platte (9) eine Einkerbung (25) mit einer größeren Breite als die Breite eines Riemens eines Sicherheitsgurts des Fahrzeugs aufweist.

## Claims

1. Motor vehicle chassis (1) comprising two lateral floor supports (4) and a seat-cushion support part (6) positioned between two lateral raisers (3) fixed on top of the lateral floor supports (4) and assembled with the lateral floor supports, two seat-cushion support reinforcers (8) each assembled with a lateral floor support (4) and with a lateral raiser (3), each seat-cushion support reinforcer (8) comprising:
- a substantially horizontal plate (9) extending the seat-cushion support part (6) laterally,
- a supporting leg (10) extending downward from the plate (9), assembled with the lateral floor support (4) **characterized in that** the plate (9) is assembled with the lateral raiser (3) along a substantially vertical mating edge (16) of the plate (9), **in that** the leg is a single leg and **in that** its assembly end (18) is positioned in vertical alignment with the plate (9) some distance from a projection onto the horizontal of the mating edge (16).

2. Chassis according to Claim 1, in which one or more relief(s) (21, 22) able to stiffen the edge of the plate (9) run around the outline of the plate, and in which the mating edge (16) has passing through it at least two assembly orifices (20) allowing the plate (9) to be assembled with one or more horizontal supports (11).

3. Chassis according to either of the preceding claims, in which the plate (9) is made of sheet metal, the periphery of the plate comprising one or more stiffening relief (s) in the form of a turned-down edge (21) and/or in the form of a pressed channel (22) running around the periphery of the sheet.

4. Chassis according to the preceding claim, where the leg is made of sheet metal, the width of the leg reducing between the plate (9) and the assembly end (18).

5. Chassis according to the preceding claim, in which the leg (10) is bent into an angle bracket shape, the upper part (14) of the angle bracket shape being secured to the surface (15) of the plate (9).

6. Chassis according to Claims 4 and 5, in which the mating edge (16) of the plate is substantially parallel to the mean plane of the leg (10).

7. Chassis according to one of the preceding claims, in which the plate (9) comprises a canted region (31) that is superelevated with respect to a first mean plane (15) of the plate along a line perpendicular to the mating edge (16).

8. Chassis according to one of the preceding claims, in which the reinforcer (8) is assembled with the lateral raiser (3) and with the lateral floor support by at least two bent sheet metal fittings (11, 12), each having a pre-assembly first face able to be secured to the lateral raiser (3) or to the lateral floor support (4), and a second face, substantially perpendicular to the first face, able to come into contact with a plane of the reinforcer (8).

9. Chassis according to one of the preceding claims, the plate (9) of which has a slot (25) of a width greater than the width of a seat belt of the vehicle.
